(19) **Europäisches Patentamt / European Patent Office / Office européen des brevets**

(11) **EP 4 199 394 B1**

(12) **EUROPEAN PATENT SPECIFICATION**

(45) Date of publication and mention of the grant of the patent:
**08.10.2025 Bulletin 2025/41**

(21) Application number: **21860054.2**

(22) Date of filing: **02.08.2021**

(51) International Patent Classification (IPC):
**H04L 1/00** *(2006.01)*     **H04L 1/1812** *(2023.01)*

(52) Cooperative Patent Classification (CPC):
**H04L 1/0057; H04L 1/0061; H04L 1/0068; H04L 1/1819;** H04L 1/0071

(86) International application number:
**PCT/CN2021/110001**

(87) International publication number:
**WO 2022/042214 (03.03.2022 Gazette 2022/09)**

(54) **RETRANSMISSION METHOD AND DEVICE**

NEUÜBERTRAGUNGSVERFAHREN UND -VORRICHTUNG

PROCÉDÉ ET DISPOSITIF DE RÉÉMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2020 CN 202010890818**

(43) Date of publication of application:
**21.06.2023 Bulletin 2023/25**

(60) Divisional application:
**25194746.1**

(73) Proprietor: **Huawei Technologies Co., Ltd.**
**Shenzhen, Guangdong 518129 (CN)**

(72) Inventors:
- **WANG, Xianbin**
  **Shenzhen, Guangdong 518129 (CN)**
- **DAI, Shengchen**
  **Shenzhen, Guangdong 518129 (CN)**
- **LI, Rong**
  **Shenzhen, Guangdong 518129 (CN)**
- **WANG, Jian**
  **Shenzhen, Guangdong 518129 (CN)**
- **CHENG, Xingqing**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
**WO-A1-2020/034332     WO-A1-2020/034332
WO-A1-2020/042161     CN-A- 108 023 675
CN-A- 111 373 675**

- **HUAWEI ET AL: "HARQ scheme for polar codes", vol. RAN WG1, no. Reno, USA; 20161114 - 20161118, 3 November 2016 (2016-11-03), XP051189034, Retrieved from the Internet <URL:http://www.3gpp.org/ftp/tsg_ran/ WG1_RL1/TSGR1_87/Docs/> [retrieved on 20161103]**
- **AD-HOC CHAIR (NOKIA): "Chairman's notes of AI 7.4 Channel Coding", 3GPP TSG RAN WG1 MEETING #90BIS; R1-1719254, 3GPP, vol. RAN WG1, no. Prague, Czechia, 9th – 13th October 2017, 1 October 2017 (2017-10-01), pages 1 - 7, XP055903251**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

Embodiments of this application relate to the field of communications technologies, and in particular, to a retransmission method and an apparatus.

## BACKGROUND

As a most basic radio access technology, channel coding plays a vital role in ensuring reliable data transmission. In an existing wireless communication system, a turbo code, a low-density parity-check (low density parity check, LDPC) code, and a polar (Polar) code are usually used for channel coding. The turbo code cannot support information transmission at a very low or very high bit rate. For medium/short packet transmission, the turbo code and the LDPC code are also difficult to achieve ideal performance at limited code lengths due to coding and decoding features of the turbo code and the LDPC code. In terms of implementation, the turbo code and the LDPC code have relatively high computational complexity in coding and decoding implementation processes. It is theoretically proved that the polar code is a good code that can obtain a Shannon capacity and that has relatively simple coding and decoding complexity. Therefore, the polar code is more widely used. In a 5th generation (5th generation, 5G) communication system, the polar code is determined as a control channel coding manner. Therefore, a coding procedure of the polar code is specified in detail in a standard, and includes specific processes, such as a process of determining whether segmentation is to be performed, a process of determining a rate matching manner, a process of mapping information bits and check bits (including cyclic redundancy check bits and/or parity check bits) on polarized channels, a coding process, and a rate matching process.

However, in the 5G standard, the polar code is used for only a control channel, and therefore does not relate to a mechanism design of hybrid automatic repeat request (Hybrid Automatic Repeat Request, HARQ). In a data channel, introduction of HARQ effectively enhances transmission reliability to increase a system throughput. Therefore, how to design a proper HARQ solution for a coding mechanism of the polar code becomes a problem that urgently needs to be resolved in a subject of applying the polar code to data channel transmission.

Further, WO 2020/034332 A1 refers to methods, systems, and devices related to wireless communication. A method of wireless communication includes determining respective starting points of data, in accordance with Polar encoding, that are associated with each Redundancy Version (RV) of a plurality of RVs and selecting data for transmission in accordance with at least one of the plurality of RVs.

Further, WO 2020/042161 A1 refers to a device, method, apparatus and computer readable storage media for incremental redundancy hybrid automatic repeat request (IR-HARQ) transmissions of polar coded systems. Polar encoding is performed on an information bit sequence based on a reference coding rate to generate a first reference parity bit sequence. A plurality of parity bit sequences are generated for a plurality of transmissions at least in part based on the first reference parity bit sequence, where a parity bit sequence for a transmission of the plurality of transmissions is contained in a parity bit sequence for a later transmission of the plurality of transmissions. A plurality of coded bit sequences are generated for the plurality of transmissions by cascading the information bit sequence and the respective parity bit sequence.

Further, the document 3GPP TSG RAN WG1 Meeting #87, Huawei, HiSilicon, November 14 - 18, 2016, Reno refers to an HARQ scheme for polar codes.

## SUMMARY

The invention is defined by the subject-matter of independent claim 1 related to a retransmission method, independent claim 8 related to a sending apparatus, independent claim 9 related to a computer readable medium and independent claim 10 related to a computer program product. Preferred embodiments are defined by the dependent claims.

## BRIEF DESCRIPTION OF DRAWINGS

FIG. 1 is a schematic diagram of an applied communication system architecture according to an embodiment of this application;
FIG. 2 is a schematic flowchart of determining a version RV according to an embodiment of this application;
FIG. 3 is a schematic flowchart of determining a version RV1 according to an embodiment of this application;
FIG. 4 is a schematic diagram of bit copying according to an embodiment of this application;
FIG. 5 is a schematic diagram 1 of a structure of a sending apparatus according to an embodiment of this application;
FIG. 6 is a schematic diagram 2 of a structure of a sending apparatus according to an embodiment of this application;
FIG. 7 is a schematic diagram of a sending device according to an embodiment of this application;
FIG. 8 is a schematic diagram 1 of a structure of a receiving apparatus according to an embodiment of this application;
FIG. 9 is a schematic diagram 2 of a structure of a receiving apparatus according to an embodiment of this application; and
FIG. 10 is a schematic diagram of a receiving device according to an embodiment of this application;

## DESCRIPTION OF EMBODIMENTS

The following describes in detail embodiments of this application with reference to accompanying drawings.

When a polar code is considered to be extended to a data channel, one idea is reusing a polar code coding method in an existing 5G standard as much as possible, for example, a nested feature between mother code sequences of different lengths and a selection principle of a rate matching manner. Certainly, this is not limited in this application.

The embodiments of this application provide a polar code coding method, specifically including new rate matching and HARQ methods.

To facilitate understanding of the embodiments of this application, the following briefly describes the polar code.

In a coding policy of the polar code, useful information of a user is transmitted by using a noiseless channel, and agreed information is transmitted by using a pure noisy channel or no information is transmitted. The polar code is also a linear block code. A coding matrix of the polar code is $G_N$, and a coding process of the polar code is $x_1^N = u_1^N G_N$, where $u_1^N = (u_1, u_2, \ldots, u_N)$ is a binary row vector, and a length of $u_1^N = (u_1, u_2, \ldots, u_N)$ is $N$ (a code length, where it can be learned that lengths of sequences $x$ and $u$ respectively obtained before and after coding are both $N$, and $N$ is also referred to as a mother code length). $G_N$ is an $N \times N$ matrix, and $G_N = F_2^{\otimes(\log_2(N))}$. $F_2^{\otimes(\log_2(N))}$ is defined as a Kronecker (Kronecker) product of $\log_2 N$ matrices $F_2$. The matrix $F_2 = \begin{bmatrix} 1 & 0 \\ 1 & 1 \end{bmatrix}$. In some implementations, $G_N$ further includes a transposed matrix $B_N$, but this does not affect essence of polar coding. Therefore, this is not limited herein. A solution in which $B_N$ is not introduced is still used as an example in this application.

In the coding process of the polar code, one part of bits in $u_1^N$ are used to carry information and are referred to as a set of information bits, and a set of indexes of these bits is denoted as A ; and the other part of the bits are set to fixed values pre-agreed on by a receive end and a transmit end and are referred to as a frozen bit set or a set of frozen bits (frozen bits), and a set of indexes of the frozen bits is represented by a complementary set A $^c$ of A . The coding process of the polar code is equivalent to

$$x_1^N = u_A G_N(A) \oplus u_{A^c} G_N(A^C)$$

. Herein, $G_N(A)$ is a submatrix obtained based on those rows that are in $G_N$ and that correspond to the indexes in the set A, and $G_N(A^C)$ is a submatrix obtained based on those rows that are in $G_N$ and that correspond to the indexes in the set $A^c$.

$u_A$ is the set of the information bits in $u_1^N$, and a quantity of information bits is K. Usually, one or more of various types of check bits including but not limited to a cyclic redundancy check (Cyclic Redundancy Check, CRC for short) bit and a parity check (Parity Check, PC for short) bit may also be included in the set of the information bits.

$u_{A^c}$ is the set of the frozen bits in $u_1^N$, and a quantity of frozen bits is (N-K), and the frozen bits are known bits. These frozen bits are usually set to 0. However, provided that the receive end and the transmit end reach an agreement in advance, the frozen bits may be randomly set. Therefore, code output of the polar code may be simplified as $x_1^N = u_A G_N(A)$. Herein, $u_A$ is the set of the information bits in $u_1^N$. $u_A$ is a row vector of a length K , that is, |A| = K, where |·| represents a quantity of elements in the set, and K is a size of an information block. $G_N(A)$ is the submatrix obtained based on those rows that are in the matrix $G_N$ and that correspond to the indexes in the set A. $G_N(A)$ is a $K \times N$ matrix.

After the mother code length N is determined, a construction process of the polar code is a selection process of the set A . This determines performance of the polar code. The construction process of the polar code is usually as follows: It is determined, based on the mother code length N, that there are a total of .N polarized sub-channels, respectively corresponding to N rows of the coding matrix. When rate matching is not considered, indexes of the first K polarized sub-channels with relatively high reliability are used as elements of the set A , and indexes corresponding to remaining (N-K) polarized sub-channels are used as elements of the set $A^c$ of the indexes of the frozen bits. The set A determines locations of the information bits, and the set $A^c$ determines locations of the frozen bits. A sequence number of a polarized sub-channel is a location index of an information bit or a frozen bit, namely, a location index in $u_1^N$ .

When rate matching is considered, namely, when puncturing (puncture) or shortening (shorten) is mainly considered, usually, N-E polarized sub-channels that need to be punctured or shortened (deleted) are first determined. Herein, E is a target code length, namely, a bit sequence length obtained after rate matching. Herein, the selected N-E polarized sub-channels are used to place frozen bits. In a 5G new radio (New Radio, NR) standard, in a puncturing case, some polarized sub-channels referred to as pre-frozen polarized sub-channels are further additionally determined, and are also used to place frozen bits. Herein, a quantity of pre-frozen polarized sub-channels may be defined as P. P is greater than or equal to 0 (in a shortening case, it is clear that P is 0, and P may not need to be considered in this case). Then, K polarized sub-channels with relatively high reliability are selected from remaining E-P polarized sub-channels based on reliability, to place the K information bits. Certainly, E-P-K sub-channels with relatively low reliability may be first selected to place the frozen bits, and remaining K sub-channels are used to place the information bits. Reliability of any one of the K polarized sub-channels for placing the K information bits is higher than reliability of any one of the E-P-K sub-channels for placing the frozen bits. In this application, a value of P is not limited. P may be 0 even in a puncturing case, and P may be greater than 0 even in a shortening case. This does not affect implementation of the technical solutions of this application. A coder and a decoder are consistent in a principle and a method for determining the K sub-channels for placing the K information bits. In addition, in the 5G NR standard, for selection of the N-E polarized sub-channels, a sequence obtained after sub-blocks (for example, 32 sub-blocks obtained through division) are interleaved is placed in a circular buffer (English: Circular buffer, where the sequence is equivalent to a rate matching sequence). In a puncturing case, reading starts from an $(N-E)^{th}$ location in the circular buffer, and bits at the zeroth location to an $(N-E-1)^{th}$ location are discarded. In a shortening cases, reading starts from the zeroth location until an $(E-1)^{th}$ location in the circular buffer, and bits at an $E^{th}$ location to an $(N-1)^{th}$ location are discarded. In this manner, a relationship between rate matching sequences of different mother code lengths is not considered.

It should be noted that the reliability relative relationship herein is based on a given reliability calculation manner. Different reliability calculation manners may cause a change in the reliability relative relationship between the polarized sub-channels, but correspond to a same method for selecting the polarized sub-channels for placing the information bits. Except in the 5G NR standard, an information bit may also be considered to be placed on the last punctured or shortened polarized sub-channel. This application imposes no limitation that the polarized sub-channels for placing the information bits need to be selected according to the 5G NR standard.

When a transport block size (Transport Block Size, TBS) of a data channel is excessively large, a transport block needs to be segmented. The solution in the foregoing description may be considered as an implementation of performing polar coding on each segment. A specific segmentation criterion is not limited in this application.

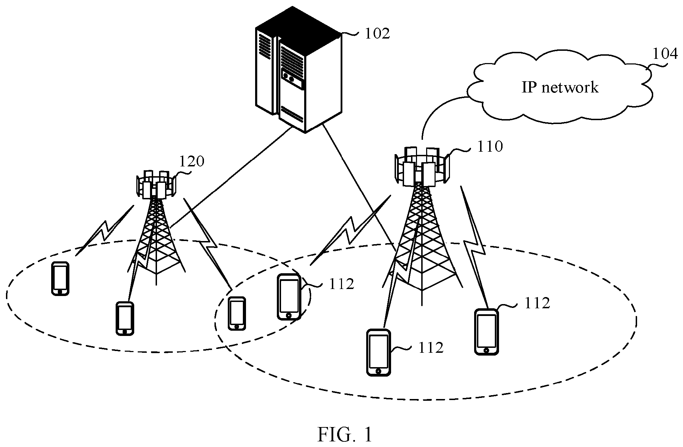

FIG. 1 is a schematic diagram of a structure of a wireless communication network according to an embodiment of the present invention. FIG. 1 shows only an example.

As shown in FIG. 1, a wireless communication network 100 includes a network device 110 and a terminal 112. When the wireless communication network 100 includes a core network 102, the network device 110 may be further connected to the core network 102. The network device 110 may further communicate with an IP network 104, such as the internet (internet), a private IP network, or another data network. The network device provides a service for a terminal in a coverage area. For example, as shown in FIG. 1, the network device 110 provides wireless access for one or more terminals 112 in a coverage area of the network device 110. In addition, there may be an overlapping area between coverage areas of network devices, for example, network devices 110 and 120. The network devices may further communicate with each other. For example, the network device 110 may communicate with the network device 120.

The network device may be a device configured to communicate with a terminal device. For example, the network device may be an evolved NodeB (Evolved NodeB, eNB or eNodeB) in an LTE system, may be a gNB in a 5G network, or may be a satellite in satellite communication, or a network side device in a future communication system. Alternatively, the network device may be a relay station, an access point, a vehicle-mounted device, or the like. In a device to device (Device to Device, D2D) communication system, a machine to machine (Machine to Machine, M2M) communication system, and an internet of vehicles system, the network device may be alternatively a terminal that functions as a base station.

The terminal may be user equipment (User Equipment, UE), an access terminal, a subscriber unit, a mobile station, a remote station, a remote terminal, a mobile device, a user terminal, a wireless communication device, a user agent, or a user apparatus. The access terminal may be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device, another processing device connected to a wireless modem, a vehicle-mounted device, a wearable device, a communicable device in the internet of everything, a terminal device in a future communication network, or the like.

Based on the communication system architecture shown in FIG. 1, in the embodiments of this application, the polar code coding method may be executed by the foregoing network device or terminal. When sending data or information as a transmit end, the network device or the terminal can use the polar code coding method.

In this case, when a polar code is used as a channel coding manner of a data channel, if an error occurs in initial transmission, how to perform retransmission? A HARQ solution of the polar code is not specified in an existing 3GPP protocol. Therefore, on one hand, existing 3GPP technologies, including rate matching solution selection and information bit selection principles, may be considered to be reused in an initial transmission solution of the data channel. However, because the data channel supports a relatively large transport block, Nmax definitely needs to be increased, and a corresponding reliability sorting sequence also needs to be designed. On the other hand, herein, a retransmission method is first provided: When an error occurs in initial transmission, an incremental redundancy (incremental redundancy, IR) manner is used for first-time retransmission, and a chase combining (chase combining, CC) manner is used for subsequent retransmission. This manner can use advantages of the IR manner and can also simplify a design. It is a relatively good compromise.

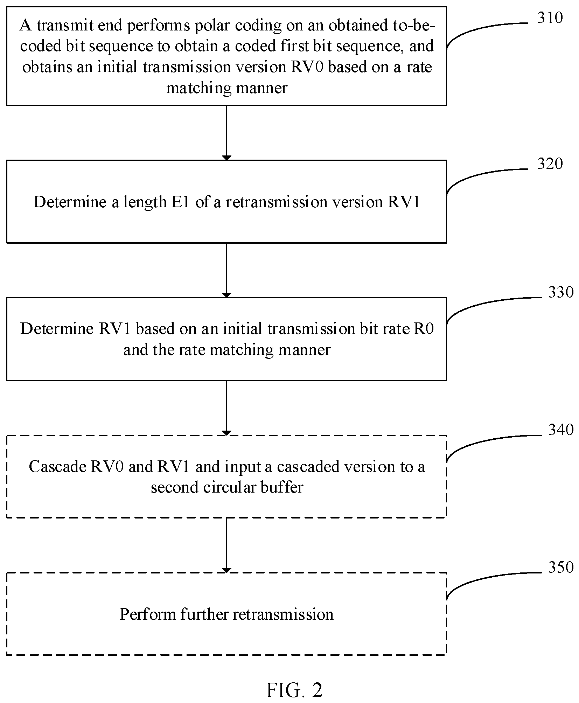

As shown in FIG. 2, an embodiment of a retransmission method about how to construct a redundancy version (RV) for HARQ transmission is disclosed.

Operation 310: A transmit end performs polar coding on an obtained to-be-coded bit sequence to obtain a coded first bit sequence, and obtains an initial transmission version RV0 based on a rate matching manner.

This step may be performed by using the conventional technology. For example, according to the 3GPP standard, the coded first bit sequence is interleaved and then an interleaved bit sequence is written into a first circular buffer. When an initial transmission bit rate RO is less than or equal to 7/16, a puncturing rate matching manner is used. In this case, RV0 is the last E0 bits in the first circular buffer. When RO is greater than 7/16, a shortening rate matching manner is used. In this case, RV0 is the first E0 bits in the first circular buffer. RO=K/EO, and E0 is a quantity of bits actually transmitted by using an air interface in initial transmission.

Operation 320: Determine a length E1 of a retransmission version RV1.

E1 is a quantity of bits that can be transmitted by using an air interface in first-time retransmission. A specific value determining method is the same as a method for determining E0.

Operation 330: Determine RV1 based on one or more of parameters such as the initial transmission bit rate RO, a length E0 of RV0, a length E1 of RV1, and the rate matching manner for retransmission.

When RO is less than or equal to a preset bit rate threshold R_threshold (R0≤R_threshold), the version RV1 of the length E1 is directly read from the first circular buffer for initial transmission. R_threshold may be any value between 1/4 and 1/2, such as 1/4, 3/8, 7/16, 15/32, or 1/2. RV1 may be the first E1 bits in the first circular buffer, or may be E1 bits that are sequentially read clockwise starting from a start point of the first circular buffer. In this selection method, a bit that is not transmitted in initial transmission may be preferably placed in RV1. Alternatively, a manner similar to that for initial transmission may be used to determine, based on the rate matching manner for retransmission, how to read RV1 from the first circular buffer. This is not limited herein.

When RO is greater than R_threshold (R0>R_threshold), a coded second bit sequence is generated in an IR manner, and rate matching is performed based on one or more of parameters including but not limited to a bit rate, Nmax, a mother code length NO used for initial transmission coding, E0, E1, and the like, to obtain RV1.

Specifically, if E1≥N0, the rate matching manner for retransmission is repetition. Otherwise, when RO is less than or equal to a preset bit rate threshold R_threshold_initial, the rate matching manner for retransmission is puncturing; or when RO is greater than the preset bit rate threshold R_threshold_initial, the rate matching manner for retransmission is shortening. R_threshold_initial is a threshold for determining a rate matching manner during initial transmission, and a value of R_threshold_initial in a 5G NR standard is 7/16. Certainly, the value of R_threshold_initial may be alternatively another preset value. For simplicity, R_threshold_initial=R_threshold may be set. Certainly, when R0=R_threshold, a manner that is the same as the manner used when RO>R_threshold may be alternatively used. This is specifically determined based on an agreement between the transmit end and a receive end.

In a possible design, if E1≥N0, the rate matching manner for retransmission is repetition. Otherwise, when RO is greater than the preset bit rate threshold R_threshold_initial and the length E1 of the retransmission version RV1 is less than the length EO of the initial transmission version RV0, the rate matching manner for retransmission may be shortening, puncturing, or a combination of shortening and puncturing.

When the rate matching manner for initial transmission is shortening or repetition, there may be the following three possible implementations.

Implementation a:

When the rate matching manner for initial transmission is shortening, sub-block interleaving is performed on the first NO bits of the second bit sequence (this may be performed in a sub-block interleaving manner specified in the NR standard, or may be performed in another manner, such as a row and column interleaving manner. This is not limited in this application, and details are not described in the following) to obtain a third bit sequence, and sub-block interleaving is performed on the first NO/2 bits of the second bit sequence to obtain a fourth bit sequence.

Details are as follows:

When E1<β*E0 (herein, for a value of the threshold, a typical value of β is 1/4, but the value may be alternatively a value such as 1/6, 1/8, or 1/16. Without loss of generality, 1/4 is used as an example in the following description. In addition, the symbol "<" may be alternatively "≤". This is because when a value is the threshold, regardless whether an equal case belongs to a greater side or a smaller side, there is a small difference in overall performance. Similarly, without loss of generality, processing of the threshold is not described otherwise in the following description), an $(E0-E1)^{th}$ bit to an $(E0-1)^{th}$ bit in the first circular buffer are used as RV1.

When $E1 \geq \beta*E0$ (when the foregoing "<" is "≤", herein "≥" is ">") and $E1 < E0$, the following operation is performed:

1. When $E0-E1 \leq \delta*N0$ (herein, for a value of the threshold, a typical value of $\delta$ is 1/2. Without loss of generality, 1/2 is used as an example in the following description. In addition, the symbol "≤" may be alternatively "<". This is because when a value is the threshold, regardless whether an equal case belongs to a greater side or a smaller side, there is a small difference in overall performance. Similarly, without loss of generality, processing of the threshold is not described otherwise in the following description), the zeroth bit to an $(E0-E1-1)^{th}$ bit of the third bit sequence are used as punctured bits, an $(E0-E1)^{th}$ bit to an $(E0-1)^{th}$ bit are used as RV1, and an $(E0)^{th}$ bit to an $(N0-1)^{th}$ bit are used as shortened bits.

2. When $E0-E1 > \delta*N0$ (when the foregoing "≤" is "<", ">" herein is "≥"), the zeroth bit to a $(\delta*N0-E1-1)^{th}$ bit of the fourth bit sequence are used as punctured bits, a $(\delta*N0-E1)^{th}$ bit to a $(\delta*N0-1)^{th}$ bit are used as RV1, and a $(\delta*N0)^{th}$ bit to an $(N0-1)^{th}$ bit of the second bit sequence are used as shortened bits.

When the rate matching manner for initial transmission is repetition, sub-block interleaving is performed on the first NO bits of the second bit sequence to obtain a third bit sequence, and sub-block interleaving is performed on the first NO/2 bits of the second bit sequence to obtain a fourth bit sequence.

When $E1 < 1/4*E0$ ($\beta=1/4$), an $(N0-E1)^{th}$ bit to an $(N0-1)^{th}$ bit in the first circular buffer are used as RV1.

When $E1 \geq 1/4*E0$ and $E1 < E0$, the following determining operation is performed:

1. When $N0-E1 \leq N0/2$ ($\delta=1/2$), the zeroth bit to an $(N0-E1-1)^{th}$ bit of the third bit sequence are used as punctured bits, and an $(N0-E1)^{th}$ bit to an $(N0-1)^{th}$ bit are used as RV1.

2. When $NO-E1 > NO/2$, the zeroth bit to an $(N0/2-E1-1)^{th}$ bit of the fourth bit sequence are used as punctured bits, an $(N0/2-E1)^{th}$ bit to an $(N0/2-1)^{th}$ bit are used as RV1, and an $(N0/2)^{th}$ bit to an $(N0-1)^{th}$ bit of the second bit sequence are used as shortened bits.

When the rate matching manner for initial transmission is repetition or shortening, an operation may be alternatively performed in a uniform manner while it is not distinguished whether the rate matching manner for initial transmission is repetition or shortening. Specifically, sub-block interleaving is performed on the first NO bits of the second bit sequence to obtain a third bit sequence, and sub-block interleaving is performed on the first NO/2 bits of the second bit sequence to obtain a fourth bit sequence.

When $E1 < 1/4*E0$ ($\beta=1/4$), a $(min(NO, E0)-E1)^{th}$ bit to a $(min(NO, E0)-1)^{th}$ bit in the first circular buffer are used as RV1.

When $E1 \geq 1/4*E0$ and $E1 < E0$, the following operation is performed:

1. When $min(NO, E0)-E1 \leq N0/2$ ($\delta=1/2$), the zeroth bit to a $(min(NO, E0)-E1-1)^{th}$ bit of the third bit sequence are used as punctured bits, a $(min(NO, E0)-E1)^{th}$ bit to a $(min(NO, E0)-1)^{th}$ bit are used as RV1, and a $(min(NO, E0))^{th}$ bit to an $(N0-1)^{th}$ bit are used as shortened bits. When $N0 \leq E0$, a quantity of shortened bits is 0.

2. When $min(NO, E0)-E1 > N0/2$, the zeroth bit to an $(N0/2-E1-1)^{th}$ bit of the fourth bit sequence are used as punctured bits, an $(N0/2-E1)^{th}$ bit to an $(N0/2-1)^{th}$ bit are used as RV1, and an $(N0/2)^{th}$ bit to an $(N0-1)^{th}$ bit of the second bit sequence are used as shortened bits.

Implementation b:

When the rate matching manner for initial transmission is repetition or shortening, sub-block interleaving is performed on the first NO bits of the second bit sequence to obtain a third bit sequence.

When $E1 < 1/4*E0$ ($\beta=1/4$) or $min(NO, EO)-E1 > NO/2$ ($\delta=1/2$), a $(min(NO, E0)-E1)^{th}$ bit to a $(min(NO, E0)-1)^{th}$ bit in the first circular buffer are used as RV1.

When $E1 \geq 1/4*E0$ and $min(NO, E0)-E1 \leq NO/2$, the zeroth bit to a $(min(NO, E0)-E1-1)^{th}$ bit of the third bit sequence are used as punctured bits, a $(min(NO, E0)-E1)^{th}$ bit to a $(min(N0, E0)-1)^{th}$ bit are used as RV1, and a $(min(NO, E0))^{th}$ bit to an $(N0-1)^{th}$ bit are used as shortened bits. When $N0 \leq E0$, a quantity of shortened bits is 0.

Implementation c:

When the rate matching manner for initial transmission is shortening, sub-block interleaving is performed on the first NO bits of the second bit sequence to obtain a third bit sequence, and sub-block interleaving is performed on the first NO/2 bits of the second bit sequence to obtain a fourth bit sequence.

When $E1 < 1/4*E0$ ($\beta=1/4$), an $(E0-E1)^{th}$ bit to an $(E0-1)^{th}$ bit in the first circular buffer are used as RV1.

When $E1 \geq 1/4*E0$ and $E1 < 1/2*E0$ ($\delta=1/2$), the zeroth bit to an $(N0/2-E1-1)^{th}$ bit of the fourth bit sequence are used as punctured bits, an $(N0/2-E1)^{th}$ bit to an $(N0/2-1)^{th}$ bit are used as RV1, and an $(N0/2)^{th}$ bit to an $(N0-1)^{th}$ bit of the second bit sequence are used as shortened bits. It is noted that a length of the fourth bit sequence herein is NO/2. In this manner, the rate matching manner for retransmission includes both puncturing and shortening. In this design, performance stability at different code lengths or different bit rates can be effectively improved.

When $E1 \geq 1/2*E0$ ($\delta=1/2$) and $E1<E0$, the zeroth bit to an $(E0-E1-1)^{th}$ bit of the third bit sequence are used as punctured bits, an $(E0-E1)^{th}$ bit to an $(E0-1)^{th}$ bit are used as RV1, and an $(E0)^{th}$ bit to an $(N0-1)^{th}$ bit are used as shortened bits.

When the rate matching manner for initial transmission is repetition, sub-block interleaving is performed on the first NO bits of the second bit sequence to obtain a third bit sequence, and sub-block interleaving is performed on the first NO/2 bits of the second bit sequence to obtain a fourth bit sequence.

When $E1<1/4*E0$ ($\beta=1/4$), an $(N0-E1)^{th}$ bit to an $(N0-1)^{th}$ bit in the first circular buffer are used as RV1.

When $E1 \geq 1/4*E0$ and $E1<1/2*N0$ ($\delta=1/2$), the zeroth bit to an $(N0/2-E1-1)^{th}$ bit of the fourth bit sequence are used as punctured bits, an $(N0/2-E1)^{th}$ bit to an $(N0/2-1)^{th}$ bit are used as RV1, and an $(N0/2)^{th}$ bit to an $(N0-1)^{th}$ bit of the second bit sequence are used as shortened bits. It is noted that a length of the fourth bit sequence herein is NO/2. In this manner, the rate matching manner for retransmission includes both puncturing and shortening. In this design, performance stability at different code lengths or different bit rates can be effectively improved.

When $E1 \geq 1/2*E0$ and $E1<E0$, the zeroth bit to an $(N0-E1-1)^{th}$ bit of the third bit sequence are used as punctured bits, and an $(N0-E1)^{th}$ bit to an $(N0-1)^{th}$ bit are used as RV1.

Similar to the implementation a, the rate matching manner for initial transmission may not be distinguished as repetition or shortening. Specifically, sub-block interleaving is performed on the first NO bits of the second bit sequence to obtain a third bit sequence, and sub-block interleaving is performed on the first NO/2 bits of the second bit sequence to obtain a fourth bit sequence.

When $E1<1/4*E0$ ($\beta=1/4$), a $(min(E0, N0)-E1)^{th}$ bit to a $(min(E0, N0)-1)^{th}$ bit in the first circular buffer are used as RV1.

When $E1 \geq 1/4*E0$ and $E1<1/2*min(E0, NO)$ ($\delta=1/2$), the zeroth bit to an $(N0/2-E1-1)^{th}$ bit of the fourth bit sequence are used as punctured bits, an $(N0/2-E1)^{th}$ bit to an $(N0/2-1)^{th}$ bit are used as RV1, and an $(N0/2)^{th}$ bit to an $(N0-1)^{th}$ bit of the second bit sequence are used as shortened bits. It is noted that a length of the fourth bit sequence herein is NO/2. In this manner, the rate matching manner for retransmission includes both puncturing and shortening. In this design, performance stability at different code lengths or different bit rates can be effectively improved.

When $E1 \geq 1/2*min(E0, NO)$ and $E1<E0$, the zeroth bit to a $(min(E0, N0)-E1-1)^{th}$ bit of the third bit sequence are used as punctured bits, a $(min(E0, N0)-E1)^{th}$ bit to a $(min(E0, N0)-1)^{th}$ bit are used as RV1, and a $(min(EO, N0))^{th}$ bit to an $(N0-1)^{th}$ bit are used as shortened bits. When $N0 \leq E0$, a quantity of shortened bits is 0.

Optionally, after locations of punctured bits in rate matching bits are determined, some bit locations may be pre-frozen. However, different from a manner of determining pre-frozen bit locations in an existing NR protocol, this application proposes a new method for determining pre-frozen bit locations. The method is specifically as follows:

1. if a quantity $P_i$ of punctured bits in an $i^{th}$ sub-block is equal to or exceeds a first preset value, determining, as pre-frozen polarized sub-channels, other polarized sub-channels corresponding to the sub-block, where the first preset value may be a constant, for example, 1, 10, or 16, or even may be a sub-block length or the like;

2. if a quantity $P_i$ of punctured bits in an $i^{th}$ sub-block exceeds a preset proportion of a total quantity of polarized sub-channels corresponding to the sub-block, determining, as pre-frozen polarized sub-channels, other polarized sub-channels corresponding to the sub-block, where the preset proportion may be 1/16, 1/8, 1/4, 1/2, or the like; or

3. if a quantity $P_i$ of punctured bits in an $i^{th}$ sub-block is equal to or exceeds a second preset value, determining, as pre-frozen polarized sub-channels, other polarized sub-channels corresponding to the sub-block, and determining, as pre-frozen polarized sub-channels, all polarized sub-channels corresponding to an $(i+1)^{th}$ sub-block to an $(i+g)^{th}$ sub-block, where the second preset value may be a constant, for example, 1, 10, or 16, or even may be a sub-block length; and g may be a constant, for example, 2, 3, or 4. In this manner, performance at different bit rates or different code lengths can be effectively balanced. It is noted that i, i+1, and i+g herein each indicate a sub-block sequence obtained after sub-block interleaving.

Certainly, if all polarized sub-channels corresponding to a sub-block are punctured, no pre-frozen polarized sub-channel exists in the sub-block.

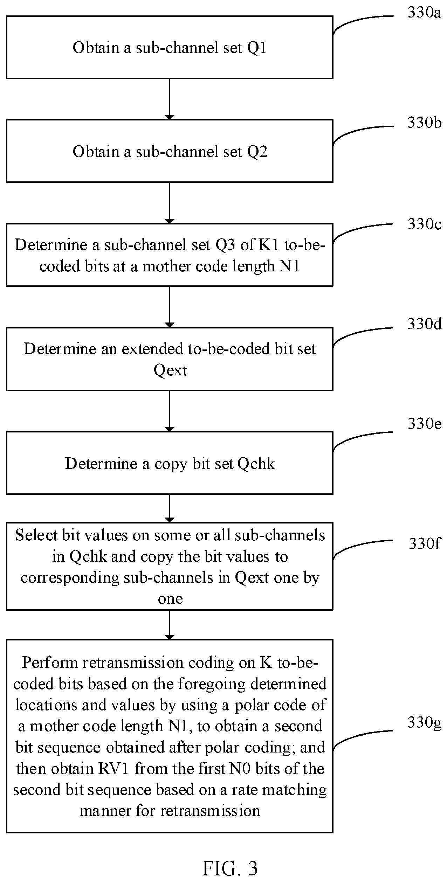

Specifically, in an embodiment shown in FIG. 3, the following operations may be used:

Operation 330a: Obtain a sub-channel set Q1, where Q1 includes K elements, and the elements are sequence numbers of K sub-channels used to place K to-be-coded bits in initial transmission. This may also be obtained in the operation 310.

Operation 330b: Add NO to the sequence numbers of all the sub-channels in Q1 to obtain a sub-channel set Q2, where $Q2(i)=Q1(i)+N0$, and i=0, 1, ..., K-1. Without loss of generality, in this application, an example in which sequence numbers of sub-channels are numbered starting from 0 is still used for description. If sequence numbers of sub-channels are numbered starting from 1, it is only necessary to add 1 correspondingly. Details are not described.

Operation 330c: Determine a sub-channel set Q3 of K1 to-be-coded bits at a mother code length N1 based on a reliability sorting sequence of a length N1=2*NO and the rate matching manner for retransmission. An element in Q3 meets: Q3(i)<NO or Q3(i)∈2, where i=0, 1, ..., K1-1. Herein, K1=K+K adjust, where K_adjust is a quantity of added to-be-coded bits, and a value of K_adjust is 0 or CBcrc1. CBcrc1 may be 0 or may not be 0. The reason why CBcrc1 is not 0 is considering that some CRC may need to be performed again during retransmission to improve retransmission reliability. A value of CBcrc1 may be determined in any one of the following manners:

- Manner 1: CBcrc1 is set to 0.
- Manner 2: CBcrc1 is determined based on a condition. When NO=4096, CBcrc1 is set to a first preset value, for example, 6, 8, 16, or 24; otherwise, CBcrc1 is set to 0.
- Manner 3: CBcrc1 is determined based on a condition. When NO=4096 and E1≥Alpha*E0, CBcrc1 is set to a first preset value, where the first preset value may be set to, for example, 6, 8, 16, or 24; otherwise, CBcrc1 is set to 0, where a value of Alpha may be any value in an interval [1/2, 1], for example, 1/2, 3/4, 7/8, or 1.

For CBcrc1, a same manner as CRC for initial transmission may be used, or a shorter CRC polynomial may be used. For example, 24-bit CRC is used for initial transmission, and 8-bit CRC is used for retransmission (CBcrc1=8).

Operation 330d: Determine an extended to-be-coded bit set Qext, where an element in Qext is an element less than NO in Q3;

When a value determining manner of CBcrc1 is the foregoing manner 2 and the value of CBcrc1 is not 0, the following operation 330e0 (not shown in the figure) needs to be further performed. It should be noted that, certainly, the operation 330e0 may also be performed when CBcrc1 is 0, but a result is not affected. Therefore, it is usually recommended that the operation 330e0 should not be performed when CBcrc1 is 0.

The operation 330e0 is as follows:

When |Qchk|=0 (|Qext|=CBcrc1), the value of CBcrc1 is adjusted to 0; otherwise, the value of CBcrc1 is not adjusted.

Optionally, when |Qchk|≠0, the value of CBcrc1 may be further determined and adjusted. An example is as follows:

- If 0<|Qchk|≤Chk_threshold (Chk_threshold is a preset threshold, and a typical value of Chk_threshold may be 10, 50, or the like), the value of CBcrc1 is adjusted to a second preset value, for example, adjusted from 8 to 6 or 3, where the second preset value is less than the first preset value.

Operation 330e: Determine a copy bit set Qchk=Q2\(Q3\Qext), where "\" represents a difference operation of sets, that is, A\B represents all elements that belong to A and do not belong to B.

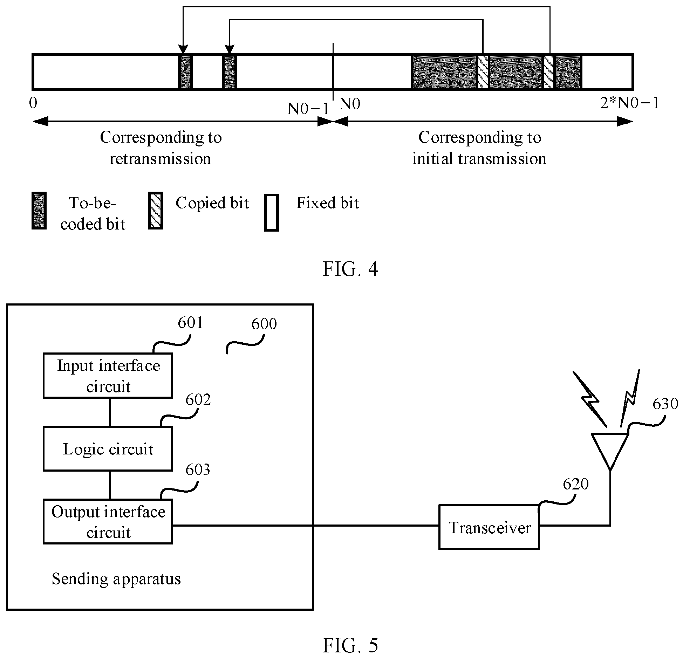

Operation 330f: Select bit values on some or all sub-channels in Qchk and copy the bit values to corresponding sub-channels in Qext one by one. FIG. 4 is a schematic diagram. CBcrc1 sub-channels are first selected from Qext to place CRC bits (this step is omitted when CBcrc1=0), and bits on |Qext|-CBcrc1 sub-channels are selected from Qchk and the bits are copied to remaining |Qext|-CBcrc1 sub-channels in Qext. The CBcrc1 CRC bits are used to perform CRC on the |Qext|-CBcrc1 copied bits. An operation |A| means applying a quantity of elements in a set A. A method for first selecting the CBcrc1 sub-channels from Qext and a method for selecting |Qext|-CBcrc1 sub-channels from Qchk may be sequential selection performed from front to back or from back to front in a natural sequence, or may be sequential selection performed from front to back or from back to front based on reliability of these sub-channels. The selection methods may be consistent or may not be consistent. This is not limited herein. When |Qext| is relatively large and |Qchk| is relatively small, and it is also necessary to select |Qchk| locations from Qext to place copied bits, a selection method is also similar. That is, the selection method may be sequential selection performed from front to back or from back to front in a natural sequence, or may be sequential selection performed from front to back or from back to front based on reliability of these sub-channels. Regardless of a selection method, it is only necessary that the transmit end and the receive end agree on uniformity.

Operation 330g: Perform retransmission coding on the K to-be-coded bits based on the foregoing determined locations and values by using a polar code of a mother code length N1, to obtain a second bit sequence obtained after polar coding; and then obtain RV1 from the first NO bits of the second bit sequence based on the rate matching manner for retransmission. A specific manner of obtaining RV1 from the first NO bits may be consistent with the manner of obtaining RVO from the first bit sequence.

To better describe the foregoing steps, the following provides a specific example.

Assuming that NO=64 and N1=128, a reliability sorting sequence in the 3GPP 5G NR standard may be directly used:

NO=64: S0=[0, 1, 2, 4, 8, 16, 32, 3, 5, 9, 6, 17, 10, 18, 12, 33, 20, 34, 24, 36, 7, 11, 40, 19, 13, 48, 14, 21, 35, 26, 37, 25, 22, 38, 41, 28, 42, 49, 44, 50, 15, 52, 23, 56, 27, 39, 29, 43, 30, 45, 51, 46, 53, 54, 57, 58, 60, 31, 47, 55, 59, 61, 62, 63]; and
N1=128: S1=[0, 1, 2, 4, 8, 16, 32, 3, 5, 64, 9, 6, 17, 10, 18, 12, 33, 65, 20, 34, 24, 36, 7, 66, 11, 40, 68, 19, 13, 48, 14, 72, 21, 35, 26, 80, 37, 25, 22, 38, 96, 67, 41, 28, 69, 42, 49, 74, 70, 44, 81, 50, 73, 15, 52, 23, 76, 82, 56, 27, 97, 39, 84, 29, 43, 98, 88, 30, 71, 45, 100, 51, 46, 75, 104, 53, 77, 54, 83, 57, 112, 78, 85, 58, 99, 86, 60, 89, 101, 31, 90, 102, 105, 92, 47, 106, 55, 113, 79, 108, 59, 114, 87, 116, 61, 91, 120, 62, 103, 93, 107, 94, 109, 115, 110, 117, 118, 121, 122, 63, 124, 95, 111, 119, 123, 125, 126, 127].

It is assumed that EO=60 and K=50, and therefore R=5/6; and R_threshold=7/16, and therefore RV1 needs to be constructed in an IR manner, and a shortening rate matching manner is used for initial transmission.

Q1=[6, 7, 10, 11, 12, 13, 14, 15, 17, 18, 19, 20, 21, 22, 23, 24, 25, 26, 27, 28, 29, 30, 31, 33, 34, 35, 36, 37, 38, 39, 40, 41, 42, 43, 44, 45, 46, 47, 48, 49, 50, 51, 52, 53, 54, 55, 56, 57, 58, 59]; and

correspondingly,
Q2=[70, 71, 74, 75, 76, 77, 78, 79, 81, 82, 83, 84, 85, 86, 87, 88, 89, 90, 91, 92, 93, 94, 95, 97, 98, 99, 100, 101, 102, 103, 104, 105, 106, 107, 108, 109, 110, 111, 112, 113, 114, 115, 116, 117, 118, 119, 120, 121, 122, 123].

It is assumed that E1 is exactly equal to EO and is also equal to 60, and a shortening rate matching manner is also used in sub-channels 64 to 127, and therefore all shortened sub-channels are $Q_{RM}$=[60, 61, 62, 63, 124, 125, 126, 127].

When K_adjust is 0:

Q3=[31, 46, 47, 51, 53, 54, 55, 57, 58, 59, 75, 77, 78, 79, 83, 85, 86, 87, 89, 90, 91, 92, 93, 94, 95, 99, 100, 101, 102, 103, 104, 105, 106, 107, 108, 109, 110, 111, 112, 113, 114, 115, 116, 117, 118, 119, 120, 121, 122, 123];
Qext=[31, 46, 47, 51, 53, 54, 55, 57, 58, 59]; and
Qchk=[70, 71, 74, 76, 81, 82, 84, 88, 97, 98].

If CBcrc1=0, bits on sub-channels in Qchk may be copied to Qext. Sequential copying may be performed in the foregoing sequence, or a bit on a sub-channel with a larger sequence number in Qchk may be copied to a sub-channel with a smaller sequence number in Qext on a premise of considering a decoding sequence, that is, a bit on a sub-channel 98 is copied to a sub-channel 31, a bit on a sub-channel 97 is copied to a sub-channel 46, ..., and a bit on a sub-channel 70 is copied to a sub-channel 59.

If CBcrc1=8, eight sub-channels other than sub-channels 31 and 46 in Qext may be used to carry added CRC bits. It is only necessary to select values on sub-channels 70 and 71 from Qchk and respectively copy the values to the sub-channels 46 and 31. The eight CRC bits are used to perform CRC on the two bits. It can be learned that in this case, it is clear that the eight CRC bits are redundant. Therefore, in an actual application, there is another possibility, that is, no CRC bit needs to be added when a quantity of to-be-coded bits falls within a first interval, and a CRC bit needs to be added when a quantity of to-be-coded bits falls within a second interval; or a relatively small quantity of CRC bits are added when a quantity of to-be-coded bits falls within a third interval, and a relatively large quantity of CRC bits are added when a quantity of to-be-coded bits falls within a fourth interval. For specific interval division, whether a CRC bit is to be added, and a quantity of added CRC bits, it is only necessary that the transmit end and the receive end perform uniformity.

When K_adjust is 8, Q3 may be as follows:

Q3=[29, 30, 31, 43, 45, 46, 47, 51, 53, 54, 55, 57, 58, 59, 71, 75, 77, 78, 79, 83, 84, 85, 86, 87, 88, 89, 90, 91, 92, 93, 94, 95, 98, 99, 100, 101, 102, 103, 104, 105, 106, 107, 108, 109, 110, 111, 112, 113, 114, 115, 116, 117, 118, 119, 120, 121, 122, 123]; and
correspondingly, Q2, Qext, and Qchk are as follows:

Q2=[70, 71, 74, 75, 76, 77, 78, 79, 81, 82, 83, 84, 85, 86, 87, 88, 89, 90, 91, 92, 93, 94, 95, 97, 98, 99, 100, 101, 102, 103, 104, 105, 106, 107, 108, 109, 110, 111, 112, 113, 114, 115, 116, 117, 118, 119, 120, 121, 122, 123];
Qext=[29, 30, 31, 43, 45, 46, 47, 51, 53, 54, 55, 57, 58, 59]; and
Qchk=[70, 74, 76, 81, 82, 97].

Eight sub-channels 47, 51, 53, 54, 55, 57, 58, and 59 in Qext may be used to carry added CRC bits, and bits on six sub-channels in Qchk are copied to six sub-channels 29, 30, 31, 43, 45, and 46. Specifically, a bit on a sub-channel 70 is copied to the sub-channel 46, a bit on a sub-channel 74 is copied to the sub-channel 45, ..., and a bit on a sub-channel 97 is copied to the sub-channel 29.

It can be learned that, even for same CBcrc1, different values of K_adjust affect a final result. Therefore, the transmit end and the receive end need to perform uniformity.

Operation 340: Cascade RV0 and RV1 and input a cascaded version to a second circular buffer.

Operation 350: Perform further retransmission.

If RV1 sent in first-time retransmission is correctly decoded, operations 340 and 350 do not need to be performed, and therefore are represented by using dashed lines. If RV1 still cannot be correctly decoded in first-time retransmission, further retransmission is required. As described above, in this case, CC retransmission is used. In this case, the transmit end may directly read a corresponding version from the second circular buffer for sending. For example, bits in $x^{th}$-time transmission may be Ex (a quantity of bits transmitted by using an air interface) bits that are read starting from the first bit located behind the last bit in previous-time transmission, or may be Ex bits that are read starting from the first bit located behind the last bit of a version RV (RV0 or RV1) used for previous-time transmission, where x is greater than 1.

Regardless of initial transmission or retransmission, to overcome channel impact, a channel interleaving operation may be further performed on sending bits obtained after rate matching. Specifically, the to-be-sent bits may be input to a channel interleaver, and then interleaved bits may be sent. Usually, optionally, the interleaver may be a row-column interleaver, where writing is performed by row and reading is performed by column, or writing is performed by column and reading is performed by row. In order that the sending bits are more evenly distributed in the interleaver to ensure random performance, a quantity of rows of the row-column interleaver may be 14. In this case, a quantity of columns in $x^{th}$-time transmission is [Ex/14], where x is an integer greater than or equal to 0. It indicates initial transmission when x=0, and it indicates a specific time of retransmission when x is another value.

Although RV1 is determined by using a plurality of separate steps as shown in FIG. 2, in actual application, some of the steps may be combined or a calculation sequence may be changed without impact on a final result.

The foregoing description of the embodiment in FIG. 2 is for the transmit end. Actually, operations of the receive end are very similar. A difference lies in that decoding, instead of coding, is performed in the operation 310, to obtain a decoded first bit sequence. To put it simply, the receive end receives a to-be-decoded signal, then determines RVO and RV1 according to the foregoing method and principle of the foregoing embodiment, and then performs IR combination or CC combination based on RV0 and RV1 in each time of retransmission and performs operations such as decoding and demodulation on the to-be-decoded signal, to obtain and output a decoding result. Certainly, the operation 350 is no longer required. Therefore, details are not described.

As shown in FIG. 5, an embodiment of this application further provides a sending apparatus 600. The retransmission method shown in FIG. 2 and FIG. 3 may be partially or completely implemented by hardware, or may be partially or completely implemented by software.

For the sending apparatus 600, based on a same inventive concept as the retransmission method shown in FIG. 2 to FIG. 4, the sending apparatus 600 is configured to execute the retransmission method shown in FIG. 2 to FIG. 4. When the retransmission method in the foregoing embodiment is partially or completely implemented by hardware, the sending apparatus 600 includes: an input interface circuit 601, configured to obtain a to-be-transmitted transport block; a logic circuit 602, configured to execute the retransmission method shown in FIG. 2 to FIG. 4, where reference can be made to the description in the foregoing method embodiment for details, and the details are not described herein; and an output interface circuit 603, configured to output a coded sequence or a retransmission sequence. Further, the coded sequence or the retransmission sequence is output to a transceiver 620. The transceiver 620 performs corresponding processing (including but not limited to digital-to-analog conversion, frequency conversion, and/or the like) on the coded sequence or the retransmission sequence, and then sends a processed sequence by using an antenna 630. Optionally, the sending apparatus 600 may be a chip or an integrated circuit during specific implementation.

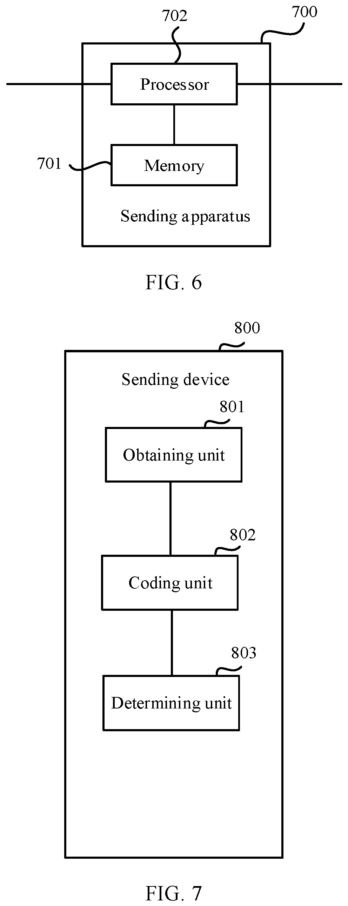

Optionally, when the retransmission method in the foregoing embodiment is partially or completely implemented by software, as shown in FIG. 7, a sending apparatus 700 includes: a memory 701, configured to store a program; and a processor 702, configured to execute the program stored in the memory 701. When the program is executed, the sending apparatus 700 is enabled to implement the retransmission method provided in the foregoing embodiment.

Optionally, the memory 701 may be a physically independent unit, or may be integrated with the processor 702.

Optionally, when the retransmission method in the foregoing embodiment is partially or completely implemented by software, a sending apparatus 700 may alternatively include only a processor 702. A memory 701 configured to store a program is located outside the sending apparatus 700, and the processor 702 is connected to the memory 701 by using a circuit/wire, to read and execute the program stored in the memory 701.

Based on the retransmission method shown in FIG. 2 to FIG. 4, as shown in FIG. 7, an embodiment of this application further provides a sending device 800, configured to execute the retransmission method shown in FIG. 2 to FIG. 4. The sending device 800 includes:

an obtaining unit 801, configured to obtain a to-be-transmitted transport block;
a coding unit 802, configured to perform coding or retransmission coding on each segment of the transport block; and
a determining unit 803, configured to determine a version RV0 and a version RV1 according to the retransmission method in the embodiment shown in FIG. 2 to FIG. 4.

Corresponding to a transmit end, an apparatus of a receive end may be similarly designed.

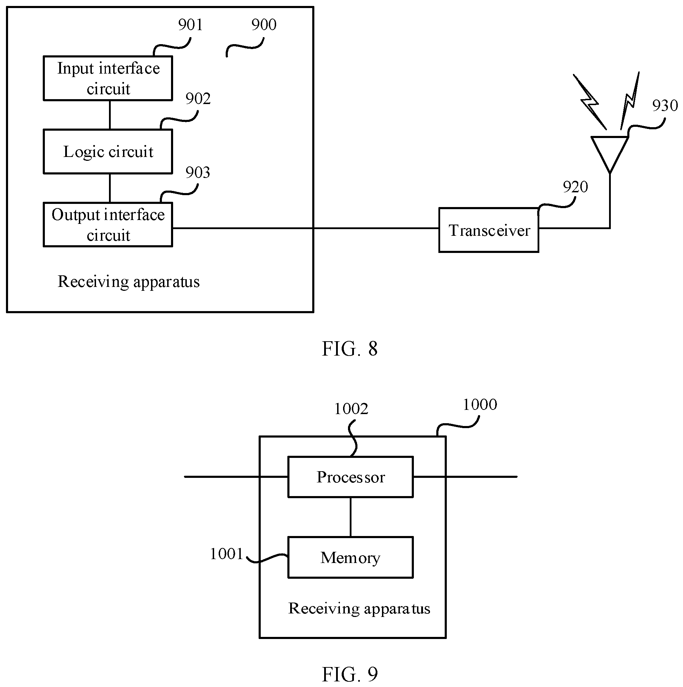

As shown in FIG. 8, a receiving apparatus 900 includes: an input interface circuit 901, configured to input a received signal; a logic circuit 902, configured to execute the foregoing retransmission method for decoding, to obtain a decoding result; and an output interface circuit 903, configured to output the decoding result.

The receiving apparatus 900 may further include a transceiver 920, for obtaining the received signal by using an antenna 930. The receiving apparatus 900 may be a chip or an integrated circuit during specific implementation.

Optionally, when the retransmission method in the foregoing embodiment is partially or completely implemented by software, as shown in FIG. 9, a receiving apparatus 1000 includes: a memory 1001, configured to store a program; and a processor 1002, configured to execute the program stored in the memory 1001. When the program is executed, the receiving apparatus 1000 is enabled to implement the retransmission method provided in the foregoing embodiment.

Optionally, the memory 1001 may be a physically independent unit, or may be integrated with the processor 1002.

Optionally, when the retransmission method in the foregoing embodiment is partially or completely implemented by software, a receiving apparatus 1000 may alternatively include only a processor 1002. A memory 1001 configured to store a program is located outside the receiving apparatus 1000, and the processor 1002 is connected to the memory 1001 by using a circuit/wire, to read and execute the program stored in the memory 1001.

The processor 702 and/or the processor 1002 each may be a central processing unit (central processing unit, CPU), a network processor (network processor, NP), or a combination of a CPU and an NP.

The processor 702 and/or the processor 1002 each may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory in the foregoing embodiment may include a volatile memory (volatile memory), such as a random access memory (random-access memory, RAM); the memory may include a nonvolatile memory (non-volatile memory), such as a flash memory (flash memory), a hard disk drive (hard disk drive, HDD), or a solid-state drive (solid-state drive, SSD); or the memory may include a combination of the foregoing types of memories.

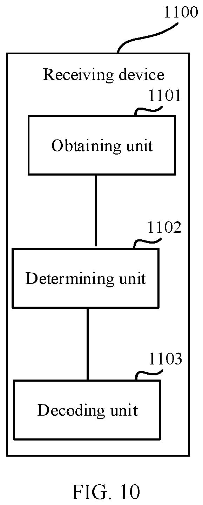

Based on the foregoing retransmission method, as shown in FIG. 10, an embodiment of this application further provides a receiving device 1100. The receiving device 1100 is configured to execute the foregoing retransmission method. The receiving device 1100 includes.

an obtaining unit 1101, configured to obtain a received signal;
a determining unit 1102, configured to determine a version RV0 and a version RV1 according to the retransmission method in the embodiment shown in FIG. 2 to FIG. 4; and
a decoding unit 1103, configured to decode each segment of a received transport block.

An embodiment of this application further provides a computer storage medium, storing computer program instructions. When the computer program instructions are executed by a computer, the foregoing retransmission method is executed.

An embodiment of this application further provides a computer program product that includes instructions. When the computer program product is run on a computer, the foregoing retransmission method is executed.

Persons skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Clearly, persons skilled in the art can make various modifications and variations to embodiments of this application without departing from the spirit and scope of embodiments of this application. In this case, this application is intended to cover these modifications and variations provided that they fall within the scope of protection defined by the following claims.

**Claims**

1. A retransmission method performed by a sending apparatus, the method comprising the steps of:

   • obtaining a to-be-coded bit sequence that comprises K to-be-coded bits, wherein K is a positive integer;
   • performing polar coding (step 310) on the to-be-coded bit sequence to obtain a coded first bit sequence, wherein a length of the coded first bit sequence is No,
   • interleaving and storing the coded first sequence into a first circular buffer used for an initial transmission;
   • determining, based on a rate matching manner for the initial transmission, an initial transmission version RVo by using the stored coded first bit sequence;
   • determining (step 320) a length E1 of a retransmission version RV1 for a first retransmission;
   • determining (step 340) the retransmission version RV1 based on an initial transmission bit rate Ro, wherein the determining the retransmission version RV1 based on the initial transmission bit rate Ro comprises:

      ○ when Ro is less than or equal to a preset bit rate threshold R_threshold, obtaining RV1 by reading E1 bits from the first circular buffer used for the initial transmission; and
      ○ when Ro is greater than R_threshold,

         ▪ generating a coded second bit sequence in an incremental redundancy, IR, manner, and
         ▪ obtaining RV1 based on the coded second bit sequence, wherein a length of the coded second bit sequence is N1, and N1=2*No, wherein the obtaining RV1 based on the coded second bit sequence is:

            ○ obtaining RV1 from the first No bits of the coded second bit sequence based on a rate matching manner for the first retransmission; and

   • sending the RV1 to a receiving apparatus.

2. The method according to claim 1, wherein the obtaining the coded second bit sequence is:

   ○ obtaining a sub-channel set Q1, wherein Q1 comprises K elements, and the K elements are sequence numbers of K sub-channels used to place the K to-be-coded bits in the initial transmission;
   ○ obtaining a sub-channel set Q2, wherein $Q2(i)=Q1(i)+No$, i=o, 1, ..., K-1, and No is a mother code length of a polar code used during the initial transmission;
   ○ obtaining a sub-channel set Q3, wherein $Q3(i)<No$ or $Q3(i)\in Q2$, and i=o, 1, ..., K-1;
   ○ determining an extended to-be-coded bit set Qext, wherein an element in Qext is an element less than No in Q3;
   ○ determining a copy bit set Qchk=Q2\(Q3\Qext); and
   ○ coding the K to-be-coded bits based on Q2, Q3, Qext, and Qchk by using a polar code with a mother code length N1, to obtain the coded second bit sequence.

3. The method according to claim 2, wherein Q3 is determined based on a reliability sorting sequence of a length N1 and the rate matching manner for the first retransmission.

4. The method according to claim 3, wherein the rate matching manner for first retransmission is one of the following manners: puncturing, shortening, repetition, and puncturing and shortening.

5. The method according to any one of claims 2 to 4, wherein the coding the K to-be-coded bits based on Q2, Q3, Qext, and Qchk by using the polar code with the mother code length N1 comprises:

   ○ selecting bit values on some or all sub-channels in Qchk and copying the bit values to corresponding sub-channels in Qext one by one.

6. The method according to any one of claims 3 to 5, wherein, when the rate matching manner for the first retransmission is puncturing and shortening, RV1 is obtained from the first No/2 bits of the coded second bit sequence based on the rate matching manner for the first retransmission.

7. The method according to claims 1 to 6, wherein the method further comprises:

   ○ cascading RVo and RV1 and inputting a cascaded version to a second circular buffer; and
   ○ performing a further retransmission based on RVo and RV1.

8. A sending apparatus configured to perform any of the methods according to claims 1 - 7.

9. A computer readable medium storing computer program instructions, wherein when the computer program instructions are executed by a sending apparatus, the sending apparatus is caused to perform any of the methods according to claims 1 - 7.

10. A computer program product comprising instructions, wherein the instructions are run on a sending apparatus, wherein, when the instructions are executed by the sending apparatus, the sending apparatus is caused to perform any of the methods according to claims 1 - 7.

**Patentansprüche**

1. Neuübertragungsverfahren, das durch ein Sendegerät durchgeführt wird, wobei das Verfahren die folgenden Schritte umfasst:

> • Erlangen einer zu codierenden Bitsequenz, die K zu codierende Bits umfasst, wobei K eine positive ganze Zahl ist;
> • Durchführen einer Polarcodierung (Schritt 310) an der zu codierenden Bitsequenz, um eine codierte erste Bitsequenz zu erlangen, wobei eine Länge der codierten ersten Bitsequenz No ist,
> • Verschachteln und Speichern der codierten ersten Bitsequenz in einen ersten Ringpuffer, der für eine Erstübertragung verwendet wird;
> • Bestimmen einer Erstübertragungsversion RVo basierend auf einer Ratenanpassungsart für die Erstübertragung unter Verwendung der gespeicherten codierten ersten Bitsequenz;
> • Bestimmen (Schritt 320) einer Länge E1 einer Neuübertragungsversion RV1 für eine erste Neuübertragung;
> • Bestimmen (Schritt 340) der Neuübertragungsversion RV1 basierend auf einer Erstübertragungsbitrate Ro, wobei das Bestimmen der Neuübertragungsversion RV1 basierend auf der Erstübertragungsbitrate Ro Folgendes umfasst:

> > ○ wenn Ro kleiner oder gleich einem voreingestellten Bitratenschwellenwert R_threshold ist, Erlangen von RV1 durch Lesen von E1 Bits aus dem ersten Ringpuffer, der für die Erstübertragung verwendet wird; und
> > ○ wenn Ro größer als R_threshold ist,

> > > ■ Erzeugen einer codierten zweiten Bitsequenz in einer inkrementellen Redundanz (incremental redundancy, IR)-Art, und
> > > ■ Erlangen von RV1 basierend auf der codierten zweiten Bitsequenz, wobei eine Länge der codierten zweiten Bitsequenz N1 ist und N1=2*No ist, wobei das Erlangen von RV1 basierend auf der codierten zweiten Bitsequenz Folgendes ist:

> > > > ○ Erlangen von RV1 aus den ersten No-Bits der codierten zweiten Bitsequenz basierend auf einer Ratenanpassungsart für die erste Neuübertragung; und

> • Senden des RV1 an ein Empfangsgerät.

2. Verfahren gemäß Anspruch 1, wobei das Erlangen der codierten zweiten Bitsequenz Folgendes ist:

> ○ Erlangen eines Unterkanalsatzes Q1, wobei Q1 K Elemente umfasst und die K Elemente Sequenznummern von K Unterkanälen sind, die verwendet werden, um die K zu codierenden Bits in der Erstübertragung zu platzieren;
> ○ Erlangen eines Unterkanalsatzes Q2, wobei Q2(i)=Q1(i)+No, i=o, 1, ..., K-1 und No eine Muttercodelänge eines Polarcodes ist, der während der Erstübertragung verwendet wird;
> ○ Erlangen eines Unterkanalsatzes Q3, wobei Q3(i)<No oder Q3(i)□Q2 und i=o,1, ..., K-1;
> ○ Bestimmen eines erweiterten zu codierenden Bitsatzes Qext, wobei ein Element in Qext ein Element weniger als No in Q3 ist;
> ○ Bestimmen eines Kopierbitsatzes Qchk=Q2 \(Q3\Qext); und
> ○ Codieren der K zu codierenden Bits basierend auf Q2, Q3, Qext und Qchk unter Verwendung eines Polarcodes mit einer Muttercodelänge N1, um die codierte zweite Bitsequenz zu erlangen.

3. Verfahren gemäß Anspruch 2, wobei Q3 basierend auf einer Zuverlässigkeitssortiersequenz einer Länge N1 und der Ratenanpassungsart für die erste Neuübertragung bestimmt wird.

4. Verfahren gemäß Anspruch 3, wobei die Ratenanpassungsart für die erste Neuübertragung eine der folgenden Arten ist: Punktieren, Verkürzen, Wiederholung, und Punktieren und Verkürzen.

5. Verfahren gemäß einem der Ansprüche 2 bis 4, wobei das Codieren der K zu codierenden Bits basierend auf Q2, Q3, Qext und Qchk unter Verwendung des Polarcodes mit der Muttercodelänge N1 Folgendes umfasst:

◦ Auswählen von Bitwerten auf einigen oder allen Unterkanälen in Qchk und Kopieren der Bitwerte nacheinander in die entsprechenden Unterkanäle in Qext.

6. Verfahren gemäß einem der Ansprüche 3 bis 5, wobei, wenn die Ratenanpassungsart für die erste Neuübertragung Punktieren und Verkürzen ist, RV1 aus den ersten No/2 Bits der codierten zweiten Bitsequenz basierend auf der Ratenanpassungsart für die erste Neuübertragung erlangt wird.

7. Verfahren gemäß einem der Ansprüche 1 bis 6, wobei das Verfahren ferner Folgendes umfasst:

o Kaskadieren von RVo und RV1 und Eingeben einer kaskadierten Version in einen zweiten Ringpuffer; und
o Durchführen einer weiteren Neuübertragung basierend auf RVo und RV1.

8. Sendegerät, das dazu konfiguriert ist, das Verfahren gemäß einem der Ansprüche 1-7 durchzuführen.

9. Computerlesbares Medium, auf dem Computerprogrammanweisungen gespeichert sind, wobei, wenn die Computerprogrammanweisungen durch ein Sendegerät ausgeführt werden, das Sendegerät dazu veranlasst wird, eines der Verfahren gemäß den Ansprüchen 1-7 durchzuführen.

10. Computerprogrammprodukt, das Anweisungen umfasst, wobei die Anweisungen auf einem Sendegerät laufen, wobei, wenn die Anweisungen durch das Sendegerät ausgeführt werden, das Sendegerät dazu veranlasst wird, eines der Verfahren gemäß den Ansprüchen 1-7 durchzuführen.

**Revendications**

1. Procédé de réémission réalisé par un appareil d'envoi, le procédé comprenant les étapes suivantes :

• l'obtention d'une séquence de bits à coder qui comprend K bits à coder, dans lequel K est un entier positif ;
• la réalisation d'un codage polaire (étape 310) sur la séquence de bits à coder pour obtenir une première séquence de bits codée, dans lequel une longueur de la première séquence de bits codée est No,
• l'entrelacement et le stockage de la première séquence de bits codée dans un premier tampon circulaire utilisé pour une émission initiale ;
• la détermination, sur la base d'une méthode de correspondance de débit pour l'émission initiale, d'une version d'émission initiale RVo à l'aide de la première séquence de bits codée stockée ;
• la détermination (étape 320) d'une longueur E1 d'une version de réémission RV1 pour une première réémission ;
• la détermination (étape 340) de la version de réémission RV1 sur la base d'un débit binaire d'émission initial Ro, dans lequel la détermination de la version de réémission RV1 sur la base du débit binaire d'émission initial Ro comprend :

o lorsque Ro est inférieur ou égal à un seuil de débit binaire prédéfini R_threshold, l'obtention de la RV1 en lisant les bits E1 du premier tampon circulaire utilisé pour l'émission initiale ; et
o lorsque Ro est supérieur à R_threshold,

■ la génération d'une seconde séquence de bits codée de manière redondante incrémentielle, IR, et
■ l'obtention de la RV1 sur la base de la seconde séquence de bits codée, dans lequel une longueur de la seconde séquence de bits codée est N1, et N1 = 2 * No, dans lequel l'obtention de la RV1 sur la base de la seconde séquence de bits codée comprend les étapes suivantes :

o l'obtention de la RV1 à partir des premiers bits No de la seconde séquence de bits codée sur la base d'une méthode de correspondance de débit pour la première réémission ; et

• l'envoi de la RV1 à un appareil de réception.

2. Procédé selon la revendication 1, dans lequel l'obtention de la seconde séquence de bits codée comprend les étapes suivantes :

o l'obtention d'un ensemble de sous-canaux Q1, dans lequel Q1 comprend K éléments, et les K éléments sont des numéros de séquence de K sous-canaux utilisés pour placer les K bits à coder dans l'émission initiale ;
o l'obtention d'un ensemble de sous-canaux Q2, dans lequel Q2(i)=Q1(i)+No, i=o, 1, ..., K-1, et No est une longueur de code mère d'un code polaire utilisé pendant l'émission initiale ;
o l'obtention d'un ensemble de sous-canaux Q3, dans lequel Q3(i)<No ou Q3(i)□Q2, et i=o,1, ..., K-1 ;
o la détermination d'un ensemble de bits à coder prolongé Qext, dans lequel un élément dans Qext est un élément inférieur à No dans Q3 ;

o la détermination d'un ensemble de bits de copie Qchk=Q2\(Q3\Qext) ; et

o le codage des K bits à coder sur la base de Q2, Q3, Qext et Qchk à l'aide d'un code polaire avec une longueur de code mère N1, pour obtenir la seconde séquence de bits codée.

3. Procédé selon la revendication 2, dans lequel Q3 est déterminé sur la base d'une séquence de tri de fiabilité d'une longueur N1 et de la méthode de correspondance de débit pour la première réémission.

4. Procédé selon la revendication 3, dans lequel la méthode de correspondance de débit pour la première réémission est l'une des manières suivantes : la perforation, le raccourcissement, la répétition et la perforation et le raccourcissement.

5. Procédé selon l'une quelconque des revendications 2 à 4, dans lequel le codage des K bits à coder sur la base de Q2, Q3, Qext et Qchk à l'aide du code polaire doté de la longueur de code mère N1 comprend :

o la sélection des valeurs de bits sur certains ou tous les sous-canaux dans Qchk et la copie des valeurs de bits dans les sous-canaux correspondants dans Qext un par un.

6. Procédé selon l'une quelconque des revendications 3 à 5, dans lequel, lorsque la méthode de correspondance de débit pour la première réémission est la perforation et le raccourcissement, la RV1 est obtenue à partir des premiers No/2 bits de la seconde séquence de bits codée sur la base de la méthode de correspondance de débit pour la première réémission.

7. Procédé selon les revendications 1 à 6, dans lequel le procédé comprend également :

o la mise en cascade de la RVo et de la RV1 et l'entrée d'une version en cascade dans un second tampon circulaire ; et

o la réalisation d'une réémission supplémentaire sur la base de la RVo et de la RV1.

8. Appareil d'envoi configuré pour exécuter l'un quelconque des procédés selon les revendications 1 à 7.

9. Support de stockage lisible par ordinateur stockant des instructions de programme informatique, dans lequel, lorsque les instructions de programme informatique sont exécutées par un appareil d'envoi, l'appareil d'envoi est amené à réaliser l'un quelconque des procédés selon les revendications 1 à 7.

10. Produit de programme informatique comprenant des instructions, dans lequel les instructions sont mises en œuvre sur un appareil d'envoi, dans lequel, lorsque les instructions sont exécutées par l'appareil d'envoi, l'appareil d'envoi est amené à réaliser l'une quelconque des méthodes selon les revendications 1 à 7.

FIG. 1

A transmit end performs polar coding on an obtained to-be-coded bit sequence to obtain a coded first bit sequence, and obtains an initial transmission version RV0 based on a rate matching manner — 310

Determine a length E1 of a retransmission version RV1 — 320

Determine RV1 based on an initial transmission bit rate R0 and the rate matching manner — 330

Cascade RV0 and RV1 and input a cascaded version to a second circular buffer — 340

Perform further retransmission — 350

FIG. 2

```
┌─────────────────────────────────────────┐
│        Obtain a sub-channel set Q1       │ ─── 330a
└─────────────────────────────────────────┘
                    │
                    ▼
┌─────────────────────────────────────────┐
│        Obtain a sub-channel set Q2       │ ─── 330b
└─────────────────────────────────────────┘
                    │
                    ▼
┌─────────────────────────────────────────┐
│  Determine a sub-channel set Q3 of K1 to-be- │ ─── 330c
│    coded bits at a mother code length N1 │
└─────────────────────────────────────────┘
                    │
                    ▼
┌─────────────────────────────────────────┐
│  Determine an extended to-be-coded bit set │ ─── 330d
│                   Qext                   │
└─────────────────────────────────────────┘
                    │
                    ▼
┌─────────────────────────────────────────┐
│        Determine a copy bit set Qchk     │ ─── 330e
└─────────────────────────────────────────┘
                    │
                    ▼
┌─────────────────────────────────────────┐
│  Select bit values on some or all sub-channels │
│      in Qchk and copy the bit values to  │ ─── 330f
│  corresponding sub-channels in Qext one by │
│                    one                   │
└─────────────────────────────────────────┘
                    │
                    ▼
┌─────────────────────────────────────────┐
│   Perform retransmission coding on K to-be- │
│  coded bits based on the foregoing determined │
│  locations and values by using a polar code of │
│  a mother code length N1, to obtain a second │ ─── 330g
│  bit sequence obtained after polar coding; and │
│  then obtain RV1 from the first N0 bits of the │
│  second bit sequence based on a rate matching │
│      manner for retransmission            │
└─────────────────────────────────────────┘
```

FIG. 3

0            N0−1  N0             2*N0−1

Corresponding to
retransmission

Corresponding to
initial transmission

To-be-
coded bit     Copied bit     Fixed bit

FIG. 4

FIG. 5

702      700

Processor

701

Memory

Sending apparatus

FIG. 6

800

Sending device

801

Obtaining unit

802

Coding unit

803

Determining unit

FIG. 7

901  900

Input interface
circuit

902

Logic circuit

903

Output interface
circuit

Receiving apparatus

Transceiver  920

930

FIG. 8

1002  1000

Processor

Memory

1001

Receiving apparatus

FIG. 9

1100

Receiving device

1101

Obtaining unit

1102

Determining unit

1103

Decoding unit

FIG. 10

**EP 4 199 394 B1**

**REFERENCES CITED IN THE DESCRIPTION**

**Patent documents cited in the description**

- WO 2020034332 A1
- WO 2020042161 A1